# EUROPEAN PATENT SPECIFICATION

(11) **EP 1 131 930 B1**
(45) Date of publication and mention of the grant of the patent: **17.01.2007**
(21) Application number: 00979470.2
(22) Date of filing: 19.09.2000
(51) Int. Cl.: H04L 29/06

(54) **PARTITIONING OF FILE FOR EMULATING STREAMING**
AUFTEILUNG EINER DATEI ZUR EMULATION EINES DATENSTROMS
PARTITIONNEMENT DE FICHIER EN VUE D'EMULER UN MODE CONTINU

(30) Priority: 27.09.1999 US 156468 P; 04.11.1999 US 433257
(43) Date of publication of application: 12.09.2001
(73) Proprietor: Koninklijke Philips Electronics N.V., 5621 BA Eindhoven (NL)
(72) Inventor: SHTEYN, Eugene, NL-5656 AA Eindhoven (NL)
(74) Representative: Damen, Daniel Martijn
(86) International application number: PCT/EP2000/009204
(87) International publication number: WO 2001/024474

(56) References cited:
- EP-A- 0 923 033
- US-A- 5 442 390
- US-A- 5 751 968
- GIRARDOT M ET AL: "Efficient representation and streaming of XML content over the Internet medium" 2000 IEEE INTERNATIONAL CONFERENCE ON MULTIMEDIA AND EXPO. ICME2000. PROCEEDINGS. LATEST ADVANCES IN THE FAST CHANGING WORLD OF MULTIMEDIA (CAT. NO.00TH8532), PROCEEDINGS OF INTERNATIONAL CONFERENCE ON MULTIMEDIA AND EXPO, NEW YORK, NY, USA, vol. 1, 30 July 2000 (2000-07-30) - 2 August 2000 (2000-08-02), pages 67-70, XP002160596 Piscataway, NJ, USA ISBN: 0-7803-6536-4

## Description

### FIELD OF THE INVENTION

The invention relates to content and/or control communications between multiple computer systems, or to such communications between computer systems and consumer devices. Specifically, the invention relates to communication constrained by bandwidth or limited by data processing resources available to the receiving system or device, especially if the communications are received by the user in real time. The type of communications can be, e.g., broadcast, multi-cast or point-to-point.

### BACKGROUND ART

Consider current major technologies for delivering digital content, such as audio, video, etc. The streaming method for audio, e.g., RealAudio by RealNetworks, consists of playing-out audio at a client device, while constantly sending data from the server to the client. The technology provided by RealNetworks comprises an encoder, a server, a splitter/cache and a player system with two-way intelligence to resolve network congestion, lost packet conditions and negotiate complex internet protocols. More specifically, the known technology comprises an automatic, variable bit-rate encoding and delivery system for audio and video. The system scales to megabit connection rates and dynamically adjusts the transmission rate as delivery rate varies due to network congestion. The format and the encoding/decoding methods of the data are proprietary. The server and the client synchronize receiving and playing in a way pre-defined by the particular architecture. The communication stack software is tightly coupled to the interpretation layer (application and user interface (UI)). Manufacturers of such technology promote high level of integration between client and server software, as a complete vertical solution. This approach mostly excludes third parties from developing custom server software (e.g., advertizing, services) and/or client applications (UI, special effects, etc.).

Another known method is downloading of a content file from a remote computer with subsequent play-out on the client. MP3 is a widely known audio data format used within the downloading context. There are other data formats, e.g., MP4 for video data etc. The major advantage of the above mentioned method is its open data standard approach. As long as the right format of the content file is observed during encoding, client and server software/hardware manufacturers are free to develop their own solutions/products.

European Patent Application EP 0923033 discloses an information transmission method and device for preventing a client from getting an impression that they are being kept waiting for a response. When the client makes a search request and the search result contains more than one item of data, the item of data having the smallest data amount is transmitted to the client first. This minimizes the time for the first complete data item to appear at the client.

A major problem with the complete download approach is the inherent latency: there is a delay between the beginning of the download and the start of the play-out. The larger the file and / or smaller the communication bandwidth, the longer it takes to transfer the content from the server to the client. This is particularly undesirable in consumer electronics systems, where perceived delay is detrimental to market acceptance of an open architecture.

United States Patent 5751968 discloses a method and system for distributing a multi-media presentation in a computer network. The method includes forming a plurality of data files, each data file including a segment of the multi-media presentation, and distributing the data files to a User Operated Display (UOD). The UOD may display a data file of the presentation substantially simultaneously with receiving other data files of the presentation. To view a presentation, a user browsing an internet page may click on a connection file, downloading the connection file to the UOD. The connection file includes reference to an interactive display application on the UOD, the application capable of receiving and displaying the files of the segments of the presentation. This system has a high level of integration between client and server software, the connection file on the internet server having reference to the interactive display application on the UOD that is capable of downloading and displaying the file segments of the presentation. As identified above, this approach mostly excludes third parties from developing custom server software (e.g., advertizing, services) and/or client applications (UI, special effects, etc.).

United States Patent 5442390 discloses a system for interactively viewing videos, in which a client is sent video data packets from a Video On-demand System (VOS) over a network. The client may store the incoming packets in a cache managed as a circular buffer to help ensure the seamless display of the video. Again there is a high level of integration between client and server software, the client and VOS using a proprietary control system for sending commands to one another.

### SUMMARY OF THE INVENTION

It is an object of the invention to provide an open architecture solution for content delivery in a download approach that allows for a low or negligible play-out latency.

According to one aspect of the invention, there is provided a method for emulating the streaming of a file over a data network to a client, the method comprising:
- partitioning the file into multiple segments;
- downloading control information to the client, the control information specifying a plurality of formats in which segments of the file are available for download;
- choosing at the client a format specified in the control information;
- downloading to the client a first one of the segments in the chosen format for playing out;
- downloading to the client a next one of the segments in the chosen format while playing out a current one of the segments;
- buffering at the client the next segment while playing out the current segment; and
- starting to play out the buffered next segment upon completion of the playing out of the current segment.
   To this end the content file is split into multiple parts. Each part or segment requires a relatively short download time. Therefore, the play-out latency is determined by the download time of the first part. The size of the individual part can be determined by the communications bandwidth, e.g., through pinging for a latency-check. The client device/application receives control information about the content. This control information comprises, for example, information relating to the size and memory location of the whole file as well as of it's parts at the server. If the client is not capable of processing split data, it proceeds with the traditional approach, i.e., downloads the whole file and then plays it out. In case the client is capable of processing parts of the content, it uses the relevant control information about the parts in order to continue downloading data, while playing. Data play-out, also called "rendering", is computation-intensive, since it requires a plurality of decoding operations. Data download is bandwidth-intensive. Accordingly, simultaneous play-out and downloading do not significantly compete for the same system resources. This separation between downloading and processing can be efficiently used in a multi-process and/or multi-thread environment.
   Preferably, the information contains references to the file location as well as references to the locations of the parts. The intended bandwidth information is associated with the parts. The client may make its own decisions regarding how many parts to download before the start of the play out (execution).
   The parts can have different data formats. The format of some of the parts can be proprietary. Information about alternative content parts, regarding bandwidth, format, location access options, etc., can be provided. Content parts can physically reside on different servers. Content can be split into parts consistent within the semantics of the content, for example, the end of musical phrase, paragraph, target control device, etc. A third party may insert its own content parts in between the original content parts. The third party parts contain, for example, advertisements, commentary, customization options. The format of parts for play-out may be chosen according to user-related information, for example, personal preferences, level of access to premium services, quality of the equipment, bandwidth sharing/fluctuation conditions, etc.

### BRIEF DESCRIPTION OF THE DRAWINGS

The invention is explained in further detail and by way of example with reference to the accompanying drawings wherein:
Fig. 1 is a flow diagram illustrating the various steps in a method according to the invention; and
Fig.2 gives an example of control code.

Throughout the Figures, same reference labels indicate similar or corresponding features.

### PREFERRED EMBODIMENTS

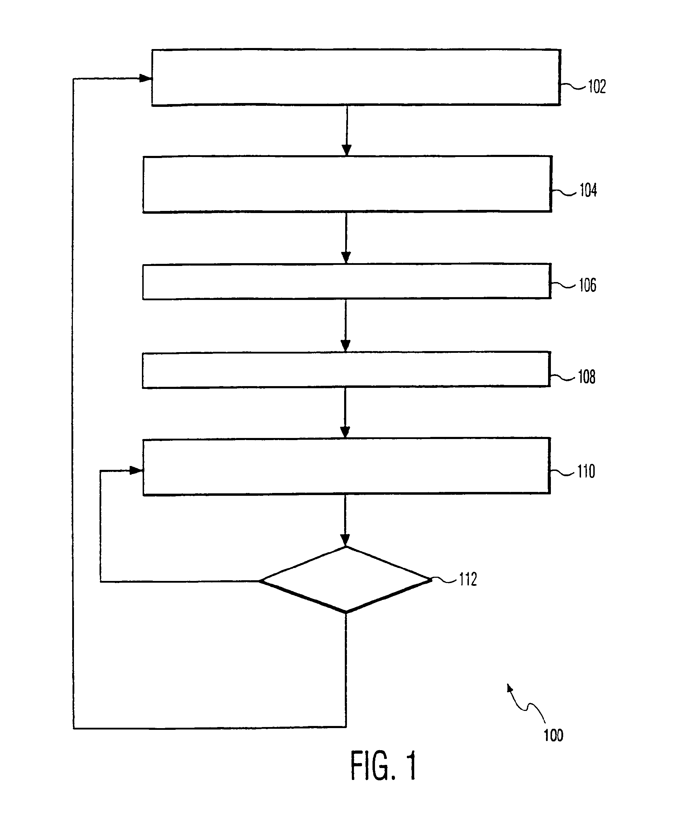

The invention enables emulating the streaming of files while using a download approach. Fig. 1 illustrates a flow diagram 100 with various steps involved in the playing-out of a segmented file at the client.

In step 102, the client contacts the server, selects the particular content file and downloads the control information that enables the retrieving and playing out of the segmented file. The control information describes the locations, (URL's), and size of the various file segments, and provides, for example, UI functionalities at the client. In this example, the control information is coded in Extensible Markup Language (XML).

In step 104 the XML code is parsed. Parsing of XML is well known in the art. A person skilled in the art can download an XML interpreter, including source code, from the Internet, see for example the URL www.ibm.com/xml. Thus, the client is enabled to get information about the content information and the URLs of the first and subsequent file segments.

In step 106, the first file segment is downloaded for play-out. Communicating with a remote server is a well known technology. For example, Java 2.0 provides a set of standard classes that enable retrieving a remote file into a buffer or as a stream. (see, e.g., www.sun.com - java 2.0 java.io.* package documentation).

In step 108, the rendering of the first segment is started. The buffered content of the first segment is forwarded to a decoding/playing module. The decoding/playing module decodes the file format which may be, for example, MP3. The playing of the supplied stream of bits involves a number of standard operating system calls to its drivers-a technique well known in the art.

In step 110, the next file segment is downloaded at the client and stored in a buffer while the previous file segment, here the first file segment, is being played out. One option is to have the downloaded files buffered in a sequence or linked list of buffers. This functionality is typically provided by the operating system of the client. For example, the Microsoft Windows family of products creates a memory buffer associated with the file every time an Application Program Interface (API) call opens the file. Alternatively, in a thread- and/or process-rich environment, several threads and/or processes can be organized to independently retrieve file segments, while playing out the content of other segments. Working with threads is a skill common for software engineers. For example, Java 2.0 from Sun Microsystems provides classes supporting multiple threads (see, for example, java.lang.thread and related documentation). Similarly, Microsoft Software Development Kit (SDK) for the Windows family of products makes thread- or process-related functionalities available to programmers.

Upon completion of playing out the first segment, the second segment is passed on from the buffer to the decoding/playing module. This can be implemented by means of, for example, a linked list. As known, a linked list is a data structure wherein each element (here: segment) has content data and a pointer to a next element (here: next segment).

The decoding/playing module has to decode the file format. The decoding program represents a standard task to a person skilled in the art to program a decoding procedure according to a widely published standard (for example MP3, etc.). The playing of the supplied stream of bits involves a number of standard operating system calls to its drivers - a technique well known in the art.

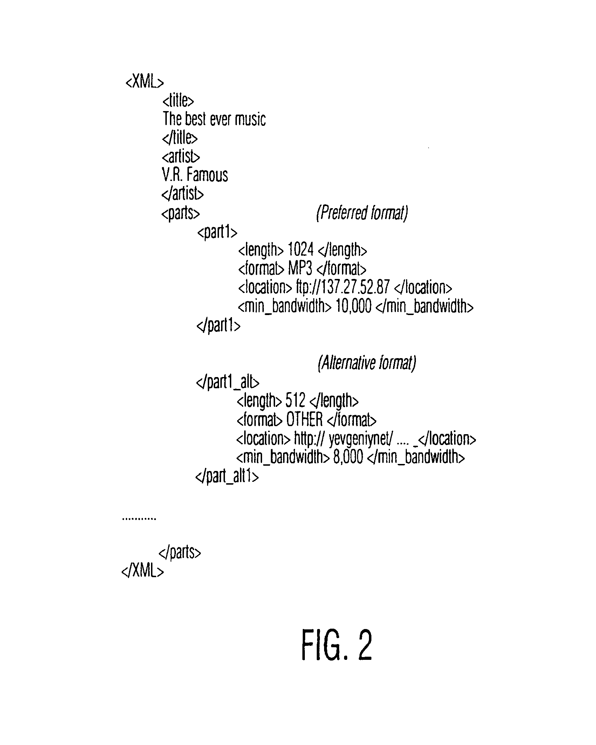

Fig.2 gives an example of information-describing content coded in XML. The code fragment labels the segments as having a title "The best ever music" performed by "V.R. Famous" and having several parts. The segment labeled "part 1 is in a preferred format and described the length of the part, for example, in bytes, the format, the minimum bandwidth required for a connection, and the location on the Internet. An alternative first part is labeled "part1 alt" having a different length, different format, different minimum bandwidth requirement, and a different location. The XML code can be combined with Extensible Style Language (XSL) for generating a user level UI at the user's client. The client thus can automatically choose the format compatible with the client's play-out capabilities.

When the client has selected the proper file, either the one of which the first part is represented here as in the preferred format or the one in the alternative format, the content of the first part is downloaded from the location specified and playing out is started automatically under application control. Combining multiple sequenced inputs is well understood in the industry. For example, Java Development Kit (JDK) v.1.2 from Sun Microsystems. Inc. provides a class java.io.SequencelnputStream (see http://java.sun.com/products/jdk/1.2/docs/api/java/io/SequenceInputStreams.html) as a standard component of the io class library. SequenceInputStream represents the logical concatenation of other input streams. It starts out with an ordered collection of input streams and reads from the first one until end of file is reached, whereupon it reads from the second one, and so on, until end of file is reached on the last of the contained input streams. An object of the java.io.SequenceInputStream class can be initialized by, e.g., enumeration (see http://java.sun.com/products/jdk/1.2/docs/api/java/util/Enumeration.html) of objects of the InputStream class (see http://java.sun.com/products/jdk/1.2/docs/api/java/io/InputStream.html). This abstract class is the superclass of all classes representing an input stream of bytes. including the class FilelnputStream (see http://java.sun.com/products/jdk/1.2/docs/api/java/io FileInputStream). In case of the downloading of multiple file parts, an application can create instances of the FilelnputStream class from local temporary files into which the parts are being downloaded. The contents of those multiple local files will be supplied to the Sequencer. The rendering component of the application will read the information out of it as if it were just a single local file.

The segmentation of the content file into separately downloadable segments enables a third party, such as a service provider, to insert between two segments specific content information, e.g., advertisements to be rendered on the client's display.

During operation, the client application could select a next segment in a different format for the same content to adapt to changing circumstances, e.g., lower bandwidth due to network congestion. Also, the user could be prompted to subscribe to a service that as a demo lets the user download only the first segment in a high quality and the next segments in a lower quality. The combination of XML and a corresponding parser and interpreter at the client controls the downloading and playing out as explained above. Accordingly, the client pulls the content segments from the locations indicated in the XML control information for buffering and subsequent play-out.

The implementation of a client in this client-server architecture can be done in a variety of ways. A first example is a hardware-based single-purpose device, similar to the Rio MP3 player by the Diamond Corp. In order to accommodate the method of the invention, the player needs, in addition, an XML parser, the ability to interpret XML and the ability to download and play-out content segments sequentially. A second example is to implement the method of the invention as a software application on a multi-purpose computing device, e.g., a PC or a set top box. The device has the software implementing the functionalities mentioned above. In a graphics-rich environment, multiple GUI's are represented to the user for further customization.

International patent publication WO 200124526 relates to a Video-on-Demand service (VOD) that is emulated in a Near-Video-on-Demand (NVOD) architecture. Content information is made available to an end-user in the NVOD architecture. An introductory portion of the content information is stored at the end-user's equipment, e.g., by downloading overnight. During playing out of the introductory portion at the end-user enabling the content information supplied in the NVOD architecture is buffered at the end-user's equipment. The equipment is controlled to switch from playing out the introductory portion stored to playing out the buffered content information.

International patent publication WO 2000028398 relates to supplying content information such as a movie, an audio file or a textual message to an end-user in a software object. The object has an encapsulated procedure for end-user access of the content information in a runtime environment. The object can specify time frame for and manner wherein the content information is to be_accessed. Since the procedure is encapsulated in the object together with the content data, and since transport of the object over the Internet is done after serializing, an adequate degree of security is provided against unauthorized play-out or copying.

International patent publication WO 2000010663 relates to emulating streaming of animation data over the Internet to a large number of clients in a broadcast application on a client-server network. The animation is considered a sequence of states. State information is sent to the clients instead of the graphics data itself. The clients generate the animation data itself under control of the state information. The server and clients communicate using a shared object protocol. Thus, streaming is accomplished as well as a broadcast without running into severe network bandwidth problems. This approach is used to map a real life event, e.g., a motor race, onto a virtual environment in order to let the user participate in a virtual race against the real life professionals, the dynamics of the virtual environment being determined by the state changes sent to the user.

International patent publication WO 200011847 describes a broadcast application on a client-server network where the streaming is emulated of animation data over the Internet to a large number of clients. The animation is considered a sequence of states. State information is sent to the clients instead of the graphics data itself. The clients generate the animation data itself under control of the state information. The server and clients communicate using a shared object protocol. Thus, streaming is accomplished as well as a broadcast without running into severe network bandwidth problems.

International patent publication WO 0060858 relates to a service for personalized video recorders such as the one from TiVo-Philips. The recorder has a hard-disk that serves as a random-access buffer.

From reading the present disclosure, other modifications will be apparent to persons skilled in the art. Such modifications may involve other features which are already known in the design, manufacture and use of systems and devices and component parts thereof and which may be used instead of or in addition to features already described herein.

## Claims

1. A method (100) for emulating the streaming of a file over a data network to a client, the method comprising:
partitioning the file into multiple segments;
downloading (102) control information to the client, the control information specifying a plurality of formats in which segments of the file are available for download;
choosing (104) at the client a format specified in the control information;
downloading (106) to the client a first one of the segments in the chosen format for playing out;
downloading (110) to the client a next one of the segments in the chosen format while playing out a current one of the segments;
buffering at the client the next segment while playing out the current segment; and
starting to play out the buffered next segment upon completion of the playing out of the current segment.

2. The method of claim 1, wherein the partitioning is determined by information about the client.

3. The method of claim 1 or 2, wherein the partitioning is determined by information about the network.

4. The method of claim 1, 2 or 3 wherein the file comprises an audio file.

5. The method of claim 1, 2 or 3 wherein the file comprises a video file.

6. The method of any of claims 1 to 5, wherein the choosing comprises choosing a format that is compatible with the capabilities of the client.

7. The method of any of claims 1 to 5, wherein the choosing comprises choosing a format according to user related information.

8. The method of any one or more of claims 1 to 5, wherein the partitioning comprises adding respective tags to respective ones of the segments.

9. A device storing an electronic file, the electronic file comprising information content partitioned into multiple segments that are separately downloadable to a client over a data network, the file comprising control information for:
- specifying (104) a plurality of formats in which segments of the file are available for download;
- enabling the client to play out (108) a first one of the segments upon downloading (106) the first segment in a format chosen by the client;
- enabling the client to buffer (110) a second one of the segments while the first segment is being played out, the second segment in a format chosen by the client; and
- enabling a seamless transition between the playing out of the first and the second segments.

10. The device of claim 9, wherein a respective one of the multiple segments comprises respective control information.

11. The device of claim 9 or 10, wherein the file is implemented as a linked list.

12. The device of claim 9, 10 or 11 comprising the control information in XML format.

13. A device for play-out (108) of information content received over a data network from a server, the information content comprising multiple segments accessible through control information provided (104) to the device, the control information specifying a plurality of formats in which segments of the information content are available for download, and wherein the device is:
- capable of choosing a format specified in the control information;
- capable of downloading (106) a first one of the segments in the chosen format from the server for playing out;
- capable of downloading (110) a next one of the segments in the chosen format while playing out (108) a current one of the segments;
- capable of buffering the next segment while playing out the current segment; and
- capable of starting to play out the buffered next segment upon completion of the playing out of the current segment.

14. The device of claim 13, wherein the device is capable of interpreting the control information to retrieve the segments from the server for sequential play-out.

15. The device of claim 14, wherein:
- the control information comprises an XML format.
- the device has an XML parser; and
- the device has an XML interpreter.

## Patentansprüche

1. Verfahren (100) zum Emulieren des Stromes einer Datei über ein Datennetzwerk zu einem Kunden, wobei das Verfahren Folgendes umfasst:
- das Aufteilen der Datei in viele Segmente,
- das Herunterladen (102) von Steuerinformation zu dem Kunden, wobei die Steuerinformation eine Anzahl Formate spezifiziert, in denen Segmente der Datei zum Herunterladen verfügbar sind,
- das Wählen (104) eines in der Steuerinformation spezifizierten Formats beim Kunden,
- das zum Kunden Herunterladen (106) eines ersten Segments in dem gewählten Format zur Wiedergabe,
- das zum Kunden Herunterladen (110) eines nächsten Segmentes in dem gewählten Format, während ein aktuelles Segment wiedergegeben wird,
- das beim Kunden Puffern des nächsten Segmentes während das aktuelle Segment wiedergegeben wird, und
- das Starten der Wiedergabe des gepufferten nächsten Segmentes bei Beendigung der Wiedergabe des aktuellen Segmentes.

2. Verfahren nach Anspruch 1, wobei die Aufteilung durch Information über den Kunden bestimmt wird.

3. Verfahren nach Anspruch 1 oder 2, wobei die Aufteilung durch Information über das Netzwerk bestimmt wird.

4. Verfahren nach Anspruch 1, 2 oder 3, wobei die Datei eine Audiodatei umfasst.

5. Verfahren nach Anspruch 1, 2 oder 3, wobei die Datei eine Videodatei umfasst.

6. Verfahren nach Anspruch 1 bis 5, wobei die Wahl das Wählen eines Formats umfasst, das zu den Fähigkeiten des Kunden kompatibel ist.

7. Verfahren nach einem der Ansprüche 1 bis 5, wobei die Wahl das Wählen eines Formats entsprechend der Benutzer bezogenen Information umfasst.

8. Verfahren nach einem der Ansprüche 1 bis 5, wobei die Aufteilung das Hinzufügen betreffender Merker zu den betreffenden Segmenten umfasst.

9. Anordnung, die eine elektronische Datei speichert, die Informationsinhalt umfasst, die in viele Segmente aufgeteilt ist, die einzeln über ein Datennetzwerk zu einem Kunden herunter geladen werden können, wobei die Datei Steuerinformation umfasst zum:
- Spezifizieren (104) einer Anzahl Formate, in denen Segmente der Datei zum Herunterladen verfügbar sind,
- das Ermöglichen, dass der Kunde beim Herunterladen (106) des ersten Segmentes in einem von dem Kunden gewählten Format, ein erstes Segment abspielen (108) kann,
- das Ermöglichen, dass der Kunde beim Abspielen des ersten Segmentes ein zweites Segment puffern (110) kann, wobei das zweite Segment in einem Format ist, das von dem Kunden gewählt wurde; und
- das Ermöglichen eines nahtlosen Übergangs zwischen der Wiedergabe des ersten und des zweiten Segmentes.

10. Anordnung nach Anspruch 9, wobei ein bestimmtes Segment der vielen Segmente die betreffende Steuerinformation enthält.

11. Anordnung nach Anspruch 9 oder 10, wobei die Datei als eine gekoppelte Liste implementiert ist.

12. Anordnung nach Anspruch 9, 10 oder 11 mit der Steuerinformation in XML-Format.

13. Anordnung zur Wiedergabe (108) von Informationsinhalt, erhalten über ein Datennetzwerk von einem Server, wobei der Informationsinhalt viele Segmente aufweist, auf die über die der Anordnung zugeführte (104) Steuerinformation zugegriffen werden kann, wobei die Steuerinformation eine Anzahl Formate spezifiziert, in denen Segmente des Informationsinhaltes zum Herunterladen verfügbar sind, und wobei die Anordnung
- imstande ist zum Wählen eines Formats, spezifiziert in der Steuerinformation,
- imstande ist, ein erstes Segment in dem gewählten Format von dem Server zur Wiedergabe herunter zu laden (106),
- imstande ist, ein nächstes Segment in dem gewählten Format herunter zu laden (110), während ein aktuelles Segment wiedergegeben (108) wird,
- imstande ist, das nächste Segment zu puffern, während das aktuelle Segment wiedergegeben wird, und
- imstande ist, das gepufferte nächste Segment bei Beendigung der Wiedergabe des aktuellen Segmentes wiederzugeben.

14. Anordnung nach Anspruch 13, wobei die Anordnung imstande ist, die Steuerinformation derart zu interpretieren, dass die Segmente von dem Server zur sequentiellen Wiedergabe erfasst werden.

15. Anordnung nach Anspruch 14, wobei:
- die Steuerinformation ein XML-Format umfasst,
- die Anordnung einen XML-Parser aufweist, und
- die Anordnung einen XML-Interpreter aufweist.

## Revendications

1. Procédé (100) pour émuler le transfert en continu d'un fichier sur un réseau de données vers un client, le procédé comprenant:
le partitionnement du fichier en plusieurs segments;
le téléchargement (102) d'informations de commande au client, les informations de commande spécifiant un ensemble de formats dans lesquels des segments du fichier sont disponibles pour téléchargement;
le choix (104) sur le client d'un format spécifié dans les informations de commande;
le téléchargement (106) sur le client d'un premier segment desdits segments dans le format choisi pour la restitution;
le téléchargement (110) sur le client d'un segment suivant desdits segments dans le format choisi tout en restituant un segment courant parmi lesdits segments;
la mise en tampon sur le client du segment suivant tout en restituant le segment courant; et
le début de la restitution du segment suivant mis en tampon à la fin de la restitution du segment courant.

2. Procédé selon la revendication 1, dans lequel le partitionnement est déterminé par des informations concernant le client.

3. Procédé selon la revendication 1 ou 2, dans lequel le partitionnement est déterminé par des informations concernant le réseau.

4. Procédé selon la revendication 1, 2 ou 3, dans lequel le fichier comprend un fichier audio.

5. Procédé selon la revendication 1, 2 ou 3, dans lequel le fichier comprend un fichier vidéo.

6. Procédé selon l'une quelconque des revendications 1 à 5, dans lequel le choix comprend le choix d'un format qui est compatible avec les capacités du client.

7. Procédé selon l'une quelconque des revendications 1 à 5, dans lequel le choix comprend le choix d'un format selon les informations relatives à l'utilisateur.

8. Procédé selon l'une quelconque des revendications 1 à 5, dans lequel le partitionnement comprend l'ajout de marqueurs respectifs à des segments respectifs parmi lesdits segments.

9. Dispositif stockant un fichier électronique, le fichier électronique comprenant du contenu d'informations partitionné en plusieurs segments qui sont séparément téléchargeables vers un client sur un réseau de données, le fichier comprenant des informations de commande pour:
- spécifier (104) un ensemble de formats dans lesquels des segments du fichier sont disponibles pour téléchargement;
- permettre au client de restituer (108) un premier desdits segments à la suite du téléchargement (106) du premier segment dans un format choisi par le client;
- permettre au client de mettre en tampon (110) un deuxième desdits segments alors que le premier segment est en cours de restitution, le deuxième segment étant dans un format choisi par le client; et
- permettre une transition continue entre la restitution du premier et du deuxième segment.

10. Dispositif selon la revendication 9, dans lequel un segment respectif parmi les multiples segments comprend des informations de commande respectives.

11. Dispositif selon la revendication 9 ou 10, dans lequel le fichier est implémenté sous la forme d'une liste chaînée.

12. Dispositif selon la revendication 9, 10 ou 11 comprenant les informations de commande en format XML.

13. Dispositif de restitution (108) de contenu d'informations reçu sur un réseau de données à partir d'un serveur, le contenu d'informations comprenant plusieurs segments accessibles par des informations de commande fournies (104) au dispositif, les informations de commande spécifiant un ensemble de formats dans lesquels des segments de contenu d'informations sont disponibles pour téléchargement, et dans lequel le dispositif est:
- capable de choisir un format spécifié dans les informations de commande;
- capable de télécharger (106) à partir du serveur un premier desdits segments dans le format choisi pour restitution;
- capable de télécharger (110) un segment suivant parmi lesdits segments dans le format choisi tout en restituant (108) un segment courant parmi lesdits segments;
- capable de mettre en tampon le segment suivant tout en restituant le segment courant; et
- capable de commencer à restituer le prochain segment suivant mis en tampon à la fin de la restitution du segment courant.

14. Dispositif selon la revendication 13, dans lequel le dispositif est capable d'interpréter les informations de commande pour récupérer du serveur les segments pour restitution séquentielle.

15. Dispositif selon la revendication 14, dans lequel:
les informations de commande comprennent un format XML.
le dispositif possède un analyseur syntaxique XML; et
le dispositif possède un interpréteur XML.
